(19) Europäisches Patentamt / European Patent Office / Office européen des brevets

(11) **EP 3 154 121 B1**

(12) **FASCICULE DE BREVET EUROPEEN**

(45) Date de publication et mention
de la délivrance du brevet:
**24.03.2021 Bulletin 2021/12**

(51) Int Cl.:
***H01M 10/633*** *(2014.01)*  ***H01M 10/66*** *(2014.01)*
***H01M 10/617*** *(2014.01)*  ***H01M 10/615*** *(2014.01)*
***H01M 10/613*** *(2014.01)*

(21) Numéro de dépôt: **16306283.9**

(22) Date de dépôt: **30.09.2016**

(54) **PROCÉDÉ DE DÉTECTION D'UN DÉFAUT D'INTERFACE THERMIQUE ENTRE UNE BATTERIE ET SON SYSTÈME DE CONDITIONNEMENT THERMIQUE**

VERFAHREN ZUR DETEKTION EINES DEFEKTS EINER THERMOSCHNITTSTELLE ZWISCHEN EINER BATTERIE UND IHREM SYSTEM FÜR THERMISCHE KONDITIONIERUNG

METHOD FOR DETECTING A THERMAL INTERFACE DEFECT BETWEEN A BATTERY AND ITS THERMAL CONDITIONING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2015 FR 1559524**

(43) Date de publication de la demande:
**12.04.2017 Bulletin 2017/15**

(73) Titulaire: **Renault S.A.S.**
**92100 Boulogne-Billancourt (FR)**

(72) Inventeurs:
• **Marchal, Caroline**
  **75015 Paris (FR)**
• **Recouvreur, Philippe**
  **92120 Montrouge (FR)**
• **Amaglio, Bruno**
  **785800 Sartrouville (FR)**

(56) Documents cités:
WO-A1-2014/177793  JP-A- 2012 164 472
US-A1- 2006 028 182  US-B1- 6 377 880

**Description**

*Domaine technique :*

La présente invention concerne un procédé de détection d'un défaut d'interface thermique entre une batterie et son système de conditionnement thermique. Elle s'applique notamment, mais pas exclusivement, aux véhicules électriques ou hybrides.

*Art antérieur et problème technique :*

Dans le contexte actuel de consensus autour du réchauffement climatique, la diminution des émissions de dioxyde de carbone ($CO_2$) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de $CO_2$, les véhicules électriques (« EV » d'après la terminologie anglo-saxonne « Electric Vehicle »), les véhicules hybrides thermique-électrique (« HEV » d'après la terminologie anglo-saxonne « Hybrid Electric Vehicle ») et les véhicules hybrides rechargeable (« PHEV » d'après la terminologie anglo-saxonne « Plug-in Hybrid Electric Vehicle ») sont aujourd'hui considérés comme la solution la plus prometteuse pour diminuer les émissions de $CO_2$.

Différentes technologies de stockage de l'énergie électrique ont été testées dans les dernières années afin de maximiser l'autonomie des EV, qui nécessitent d'être branchés régulièrement via un chargeur afin de recharger leur batterie de traction. Il apparaît aujourd'hui que les batteries à cellules lithium-ion (Li-ion) sont celles qui permettent d'obtenir le meilleur compromis entre la densité de puissance, qui favorise les performances en termes d'accélération notamment, et la densité d'énergie, qui favorise l'autonomie. Cependant, l'utilisation de cette technologie Li-ion pour fabriquer des batteries de traction pour EV n'est pas sans poser de nombreuses difficultés.

En particulier, la migration des ions lithium entre les électrodes d'une cellule Li-ion, que ce soit à la décharge lorsque le véhicule roule comme à la charge lorsqu'il est branché à un réseau de distribution électrique, est une réaction exothermique : les cellules voient donc naturellement leur température augmenter. Il faut contrôler cette montée en température des cellules, car leurs performances, notamment en termes de puissance et d'autonomie, ainsi que leur durée de vie, dépendent de la température de fonctionnement. Les cellules, qui sont de surcroît enfermées dans une enceinte quasiment hermétique, doivent donc être maintenues dans une plage de température de fonctionnement optimale, à la charge comme à la décharge. Si la température est trop basse, les cellules ne peuvent pas délivrer toute leur énergie durant la décharge et donc les performances du véhicule sont réduites. Au contraire, si la température est trop élevée, notamment durant la charge, c'est la durée de vie des cellules qui sera réduite. Il s'agit là d'une problématique à laquelle la présente invention se propose de répondre.

C'est pourquoi la plupart des véhicules électriques sont équipés d'un système de conditionnement thermique pour chauffer ou refroidir leur batterie de traction par l'intermédiaire d'un circuit de fluide caloporteur, de l'eau notamment. Un inconvénient d'un tel système est sa fiabilité : dans un environnement automobile, très contraignant par nature, on constate souvent des évolutions des caractéristiques mécaniques des composants et donc de leurs interfaces thermiques, entraînant une dégradation globale des performances des échanges thermiques avec le fluide caloporteur. Il s'agit là encore d'un problème que la présente invention se propose de résoudre.

Dans le but de pallier ce manque de fiabilité, le brevet FR2968842 divulgue un procédé pour diagnostiquer certains défauts d'un système de refroidissement d'une batterie de traction. Un inconvénient de cette solution est qu'elle ne permet pas de détecter un défaut au niveau d'une interface située à l'extérieur de la batterie. Il s'agit là encore d'un problème que la présente invention se propose de résoudre.

Le brevet US 6 377 880 B1 divulgue un dispositif de détection d'une panne de ventilation d'une batterie de véhicule hybride. Toutefois, cette solution préconise l'utilisation d'une cartographie figée comme modèle de diffusion thermique, entrainant un manque de précision des estimations dans certaines conditions d'utilisation et pouvant ainsi conduire à des diagnostics peu fiables.

*Reprise des revendications :*

L'invention a notamment pour but de résoudre les problèmes précités : un principe de l'invention est d'évaluer, tout au long de la vie du véhicule, les performances de conditionnement thermique (i.e. refroidissement ou réchauffage) en se basant sur l'évaluation de la résistance thermique de toutes les interfaces impliquées dans ce conditionnement, ceci afin de détecter toute dégradation possible. Ainsi, lors de passages en garage, les réalignements mécaniques nécessaires peuvent être réalisés, afin de corriger les défauts d'interface thermique. A cet effet, l'invention a notamment pour objet un procédé de détection d'un défaut d'interface thermique entre une batterie et son système de conditionnement thermique. Le procédé inclut une étape de conditionnement thermique de la batterie par utilisation du système de conditionnement. Il inclut également, à la fin de l'étape de conditionnement, une étape de mesure d'une valeur de température qui soit représentative de la température de la batterie. Il inclut également une étape d'estimation, par utilisation d'un modèle des échanges thermiques entre la batterie et le système de conditionnement, d'une température attendue de la batterie à la fin de l'étape de conditionnement. Il inclut également une étape de comparaison de la température mesurée et de la température estimée. Il inclut également, si l'écart entre la température mesurée et de la température estimée dépasse un seuil prédéterminé, une étape de stockage ou de mise à disposition d'une information signalant le dépassement.

Avantageusement, le système de conditionnement peut comporter un circuit dans lequel circule un fluide caloporteur, le modèle des échanges thermiques étant une relation ou un ensemble de relations qui expriment, en fonction de la puissance thermique dissipée par la batterie et de la somme des résistances thermiques entre la batterie et le fluide, l'évolution de l'écart de température entre la batterie et le fluide.

Avantageusement, le modèle des échanges thermiques peut inclure, dans la somme des résistances thermiques entre la batterie et le fluide caloporteur, la résistance thermique de la batterie elle-même.

Dans un mode réalisation, le circuit de fluide caloporteur pouvant être agencé dans une semelle métallique supportant la batterie, le modèle des échanges thermiques peut inclure, dans la somme des résistances thermiques entre la batterie et le fluide caloporteur, la résistance thermique de la semelle.

Dans un mode réalisation, un coussin thermique pouvant être disposé entre la batterie et la semelle, le modèle des échanges thermiques peut inclure, dans la somme des résistances thermiques entre la batterie et le fluide caloporteur, la résistance thermique du coussin.

Dans un mode réalisation, la batterie pouvant être la batterie de traction d'un véhicule électrique ou hybride, le procédé peut préférentiellement être mis en œuvre automatiquement durant une phase de roulage sur route, son étape de conditionnement étant activée dès lors que la température de la batterie dépasse un seuil prédéfini. Mais il peut également être mis en œuvre durant une phase de maintenance du véhicule, sa première étape de conditionnement étant alors activée volontairement par utilisation d'un dispositif nomade de diagnostic connecté au véhicule.

La présente invention a également pour objet un véhicule électrique ou hybride comportant des moyens matériels et logiciels pour mettre en œuvre un tel procédé.

La présente invention a également pour objet un dispositif nomade comportant des moyens matériels et logiciels pour mettre en œuvre un tel procédé.

*Avantages :*

La présente invention a encore pour principal avantage de limiter dans le temps les surconsommations d'énergie dues aux défauts d'interface.

*Description des figures :*

D'autres caractéristiques et avantages de l'invention apparaîtront à l'aide de la description qui suit faite en regard de dessins annexés qui représentent :

- la figure 1, par un schéma simplifié, des interfaces thermiques pouvant être prises en compte dans un exemple de réalisation de l'invention;
- la figure 2, par un graphe, un gabarit de comparaison selon un exemple de réalisation de l'invention.

*Description de l'invention à partir des figures* :

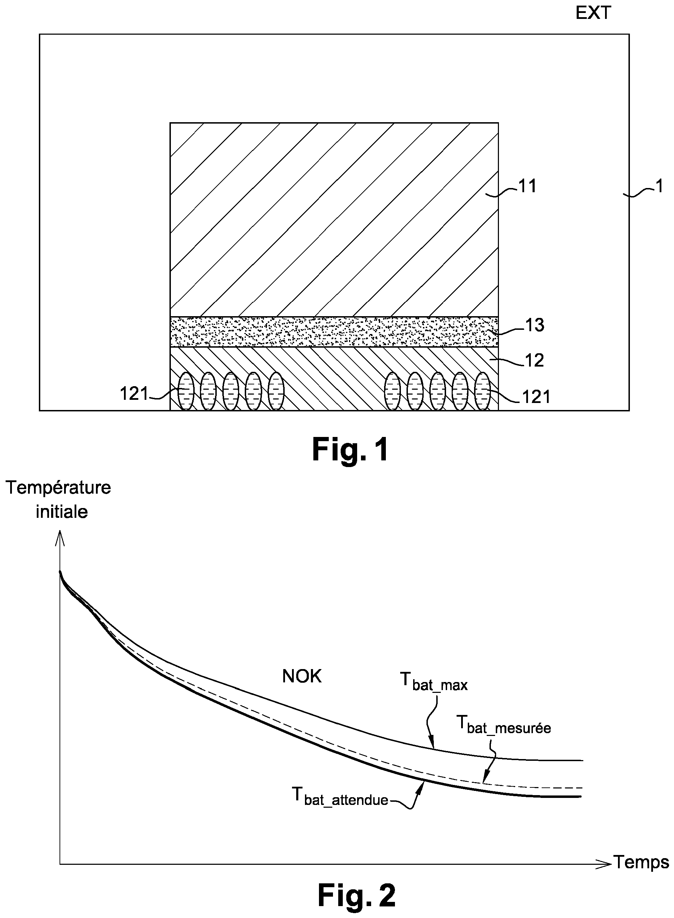

La figure 1 illustre un exemple de réalisation de l'invention. Un pack de batterie 1 comporte au moins une batterie d'accumulateurs 11 renfermant des composants dégageant de la chaleur durant leur fonctionnement, parmi lesquels des cellules li-ion, de la connectique et un « Battery Management System » selon la terminologie anglo-saxonne. La batterie 11 doit donc être conditionnée thermiquement. Ainsi, elle est disposées sur une semelle aluminium 12 refroidie ou réchauffée par un fluide caloporteur, de l'eau par exemple, circulant en son corps dans un circuit 121 par l'intermédiaire d'un coussin thermique 13 ou «Thermal Pad » selon la terminologie anglo-saxonne. Le coussin thermique 13 permet d'assurer une meilleure jonction thermique entre la batterie 11 et la semelle d'aluminium 12. En mode stabilisé, les échanges thermiques étant établis avec un débit du fluide caloporteur constant et un courant constant, les échanges thermiques entre la batterie 11 et le fluide caloporteur sont décrits par l'équation (E0) suivante :

$$T_{bat} - T_{fluide} = \left(R_{th,bat} + R_{th,pad} + R_{th,sem}\right) * P_{th}$$

$$(E0)$$

Dans l'équation E0, $T_{bat}$ est la température de la batterie 11, $T_{fluide}$ est la température du fluide caloporteur lorsqu'il rentre dans le circuit 121, $R_{th,bat}$ est la résistance thermique de la batterie 11, $R_{th,pad}$ est la résistance thermique du coussin 13, $R_{th,sem}$ est la résistance thermique de la semelle 12 et $P_{th}$ est la puissance dissipée par la batterie 11 et échangée avec le fluide caloporteur. Initialement, lorsque le pack 1 est neuf, ces résistances thermiques ont des valeurs minimales correspondant à des surfaces de contact maximales entre la batterie 11 et le coussin 13, ainsi qu'entre le coussin 13 et la semelle 12. On peut dire que les interfaces sont quasiment parfaites. Toutefois, comme explicité précédemment, durant la vie du véhicule, des contraintes mécaniques, notamment les vibrations transmises par les organes de liaison au sol, peuvent engendrer une dégradation des surfaces de contact entre ces éléments. Par exemple, le coussin thermique 13 peut se déchirer, ou encore les cellules li-ion dans la batterie 11 peuvent gonfler et par conséquent la batterie 11 se déformer. Cela modifie les résistances thermiques associées et impacte l'efficacité du conditionnement thermique de la batterie 11. L'invention propose de diagnostiquer lors de la vie du véhicule la dégradation potentielle de ces contacts.

Dans un premier mode de réalisation, le procédé de diagnostic selon l'invention peut être mis en œuvre de manière régulière tout au long de la vie du véhicule par un calculateur embarqué, par exemple le BMS ou le calculateur central du véhicule, encore appelé EVC pour « Electric Vehicle Controller » selon la terminologie anglo-saxonne. Il peut alors comporter les étapes qui suivent.

Durant une première étape, on choisit une phase de vie adaptée sans défaut du système de conditionnement, par exemple le début de vie, durant laquelle la température de la batterie 11 est supérieure à un seuil pour refroidissement ou durant laquelle la température de la batterie 11 est inférieure à un seuil pour réchauffage, de sorte que le système de conditionnement est activé automatiquement.

Durant une deuxième étape, on peut éventuellement laisser les stratégies de contrôle du système de conditionnement commander ses organes de manière autonome : par exemple, lorsqu'il s'agit de refroidir la batterie 11, on peut le laisser commander ses pompes et ses ventilateurs (non représentés sur les figures). Mais si ces derniers ne s'activent pas assez rapidement, on peut éventuellement forcer leur activation, dans le but d'activer le circuit 121 à une capacité de refroidissement prédéterminée, par exemple sa capacité maximale.

Durant une troisième étape, on peut enregistrer pendant un laps de temps dépendant de la capacité calorifique $MCp_{bat}$ de la batterie (par exemple 50 minutes) des données disponibles sur le réseau CAN du véhicule, comme la résistance électrique interne de la batterie 11, le courant traversant la batterie 11, les températures à divers emplacements dans la batterie 11, la température du fluide caloporteur à l'entrée du circuit 121, le débit du ou des actuateurs (e.g. les pompes disposées le long du circuit 121), le signal PWM de pilotage du ventilateur si besoin, ainsi que la température extérieure.

Durant une quatrième étape, on peut calculer la température de la batterie 11 attendue $T_{bat\_attendue}$ en fonction de la température du fluide caloporteur $T_{fluide}$, de la température extérieure $T_{ext}$, du débit du fluide caloporteur, du courant I traversant la batterie 11 et de la résistance électrique interne $R_{bat,elec}$ de la batterie 11, ces deux dernières valeurs permettant d'estimer la puissance thermique $P_{th}$. Par exemple, le modèle des échanges thermiques suivant, comportant les équations E1, E2 et E3, peut permettre de calculer $T_{bat\_attendue}$ :

$$MCp_{bat} \frac{dTbat}{dt} = Rbat,elec.\, I^2 + \frac{Tpad - Tbat}{Rth,bat} + \frac{Text - Tbat}{Rth,ext} \qquad (E1)$$

$$MCp_{pat} \frac{dTpad}{dt} = \frac{Tbat - Tpad}{Rth,bat} + \frac{Tsem - Tpad}{Rth,pad} \qquad (E2)$$

$$MCp_{sem} \frac{dTsem}{dt} = \frac{Tpad - Tsem}{Rth,pad} + \frac{Tfluide - Tsem}{Rth,sem} \qquad (E3)$$

Où $MCp_{pad}$ désigne la capacité thermique du coussin 13, $MCp_{sem}$ désigne la capacité thermique de la semelle 12, $T_{pad}$ la température du coussin 13, $T_{sem}$ la température de la semelle 12, $R_{th,pad}$ la résistance thermique du coussin 13, $R_{th,sem}$ la résistance thermique de la semelle 12.

Durant une cinquième étape, on peut calculer par le même modèle une température maximale que la batterie 11 ne doit pas dépasser $T_{bat\_max}$, en utilisant les résistances thermiques initiales majorées de 10% par exemple, en fonction de la température du fluide, de la température extérieure, du débit du fluide caloporteur, du courant traversant la batterie 11 et de la résistance interne de la batterie 11.

Durant une sixième étape, on peut analyser la position de la température mesurée $T_{bat\_mesuree}$ par rapport au gabarit calculé dans les deux étapes précédente. Comme illustré par la figure 2 à partir d'une température initiale, si la température $T_{bat\_mesuree}$ est hors du gabarit, c'est-à-dire si elle est supérieure à la température $T_{bat\_attendue}$, alors on peut envoyer une alerte non immobilisante au tableau de bord du véhicule et enregistrer dans le calculateur BMS ou EVC les données du mode de fonctionnement dégradé ainsi détecté, pour réalignement mécanique ultérieur en dehors de la batterie 11 (e.g. remplacement du coussin thermique 13 ou resserrage de la batterie 11 sur la semelle 12). Si elle est supérieure à $T_{bat\_max}$, alors on peut envoyer une alerte immobilisante au tableau de bord du véhicule ;

La détection d'une défaillance par le procédé décrit précédemment pourra alors être validée en atelier avec un diagnostic plus précis en l'absence de cyclage (c'est-à-dire avec I=0) car, suite au vieillissement, la résistance interne intervenant dans le calcul peut être relativement mal évaluée par le BMS.

Dans un second mode de réalisation, le diagnostic selon l'invention peut être mis en œuvre de manière plus exceptionnelle, notamment lors du passage en atelier du véhicule pour entretien. Il s'agit de forcer le réchauffement de la batterie 11, en désactivant ses moyens de refroidissement (e.g. pompes et ventilateurs), puis de forcer son refroidissement en activant au maximum de leurs capacités ces moyens de refroidissement.

Un modèle thermique simple décrivant les échanges thermiques entre le centre de la batterie 11 et le fluide caloporteur contenu dans le circuit de canalisations 121 peut être mis au point lors du développement du pack de batterie 1. Ce modèle peut être basé sur les résistances thermiques $R_{th,bat}$, $R_{th,pad}$ et $R_{th,sem}$ évoquées précédemment, qui peuvent être mesurées initialement de manière locale, puis calibré en effectuant des tests dans différentes configurations de fonctionnement, mais il peut être simplifié et ne comporter que $T_{bat}$, $T_{fluide}$ et $T_{ext}$. De préférence, il peut être implémenté de manière logicielle dans un dispositif nomade de diagnostic, un ordinateur portable par exemple, qui pourra être transporté dans une valise spéciale contenant la connectique adéquate au véhicule.

Les étapes du présent mode de réalisation, qui propose de faire le diagnostic selon l'invention pendant le refroidissement du pack 1, peuvent être les suivantes :

- on peut d'abord brancher le dispositif nomade au véhicule ;
- on peut ensuite désactiver les moyens de conditionnement du pack 1, comme les pompes et les ventilateurs ; on peut vérifier la réalisation de ces consignes nulles de débit du fluide caloporteur ;
- puis, en accélérant sur un pont élévateur ou en chargeant le pack 1 à puissance élevée, on peut faire monter la température la batterie jusqu'à 50°C par exemple, en vérifiant régulièrement que cette montée en température se fait de manière homogène : par exemple on peut vérifier que l'écart entre la température moyenne et la température minimum locale ne dépasse pas 2°C, de même pour la température maximum locale ; s'il n'est pas possible de rendre le pack 1 homogène en température, on peut déjà déduire que l'électrochimie ou la connectique interne de la batterie 11 est défaillante et on peut investiguer un défaut au cœur de la batterie 11, comme un connecteur desserré ou une cellule sur-gonflée ;
- une fois le pack 1 à 50°C de manière homogène, on peut forcer les moyens de conditionnement, comme les pompes et les ventilateurs, à des consignes de débit du fluide prédéterminées ; on peut vérifier la réalisation de ces consignes ;
- puis, on peut enregistrer pendant un laps de temps dépendant de la capacité calorifique $MCp_{bat}$ de la batterie (par exemple 50 minutes) des données disponibles sur le réseau CAN du véhicule, comme les températures à divers emplacements dans la batterie 11, la température du fluide caloporteur à l'entrée du circuit 121, le débit du ou des actuateurs (e.g. les pompes disposées le long du circuit 121), le signal PWM de pilotage du ventilateur si besoin, ainsi que la température extérieure ;
- puis, on peut calculer la température de la batterie 11 attendue $T_{bat\_attendue}$ à partir du modèle thermique, en fonction de la température du fluide caloporteur, de la température extérieure, du débit du fluide caloporteur.
- Durant une cinquième étape, on peut calculer par le modèle une température maximale que la batterie 11 ne doit pas dépasser $T_{bat\_max}$, en utilisant les résistances thermiques initiales majorées de 10% par exemple, en fonction de la température du fluide, de la température extérieure, du débit du fluide caloporteur ;
- enfin, on peut analyser la position de la température mesurée $T_{bat\_mesuree}$ par rapport au gabarit calculé dans les deux étapes précédente. Comme illustré par la figure 2 à partir d'une température initiale, si la température $T_{bat\_mesuree}$ est hors du gabarit, c'est-à-dire si elle est supérieure à la température $T_{bat\_attendue}$, alors on peut réaligner les interfaces mécaniques en dehors de la batterie 11 (e.g. remplacement du coussin thermique 13 ou resserrage de la batterie 11 sur la semelle 12).

Il faut noter que le procédé de diagnostic selon l'invention peut être mis en œuvre non seulement dans un but de contrôle de la continuité des performances thermiques du système de conditionnement batterie, comme dans les deux exemples qui précèdent, mais également dans des stratégies de régulation optimisée de la température d'un pack de batterie, en adaptant la puissance de chauffage et de refroidissement aux valeurs courantes des résistances thermiques.

*Autres avantages :*

Outre d'éviter la diminution des performances à froid et la diminution de la durabilité à chaud, la présente invention a bien pour principal avantage de limiter la consommation d'énergie, augmentant l'autonomie du véhicule tout en faisant faire des économies à son conducteur. De plus, elle peut être mise en œuvre par simple mise à jour logicielle, du BMS, de l'EVC ou encore du dispositif nomade de diagnostic.

**Revendications**

1. Procédé de détection d'un défaut d'interface thermique entre une batterie (11) et son système de conditionnement thermique, **caractérisé en ce qu'**il inclut :

    - une étape de conditionnement thermique de la batterie par utilisation du système de conditionnement ;
    - à la fin de l'étape de conditionnement, une étape de mesure d'une valeur de température ($T_{bat\_mesuree}$) qui soit représentative de la température de la batterie ;
    - une étape d'estimation, par utilisation d'un modèle des échanges thermiques (E1, E2, E3) entre la batterie et le système de conditionnement, d'une température attendue de la batterie ($T_{bat\_attendue}$) à la fin de l'étape de conditionnement ;
    - une étape de comparaison de la température mesurée et de la température estimée ;
    - si l'écart entre la température mesurée et de la température estimée dépasse un seuil prédéterminé, une étape de stockage ou de mise à disposition d'une information signalant le dépassement, le procédé étant **caractérisé en ce que**, le système de conditionnement comportant un circuit (121) dans lequel circule un fluide caloporteur, le modèle des échanges thermiques (E1, E2, E3) est une relation analytique ou un ensemble de relations analytiques qui expriment, en fonction de la puissance thermique dissipée ($P_{th}$) par la batterie (11) et de la somme des résistances thermiques entre la batterie et le fluide, l'évolution de l'écart de température entre la batterie et le fluide.

2. Procédé selon la revendication 1, **caractérisé en ce que** le modèle des échanges thermiques (E1, E2, E3) inclut, dans la somme des résistances thermiques entre la batterie (11) et le fluide caloporteur, la résistance thermique de la batterie elle-même ($R_{th,bat}$).

3. Procédé selon la revendication 2, **caractérisé en ce que**, le circuit de fluide caloporteur étant agencé dans une semelle métallique (12) supportant la batterie (11), le modèle des échanges thermiques (E1, E2, E3) inclut, dans la somme des résistances thermiques entre la batterie (11) et le fluide caloporteur, la résistance thermique de la semelle ($R_{th,sem}$).

4. Procédé selon la revendication 3, **caractérisé en ce que**, un coussin thermique (13) étant disposé entre la batterie (11) et la semelle (12), le modèle des échanges thermiques (E1, E2, E3) inclut, dans la somme des résistances thermiques entre la batterie et le fluide caloporteur, la résistance thermique du coussin ($R_{th,pad}$).

5. Procédé selon l'une quelconque des revendications 1 à 4, **caractérisé en ce que**, la batterie (11) étant la batterie de traction d'un véhicule électrique ou hybride, il est mis en œuvre automatiquement durant une phase de roulage sur route, son étape de conditionnement étant activée dès lors que la température de la batterie dépasse un seuil prédéfini.

6. Procédé selon l'une quelconque des revendications 1 à 4, **caractérisé en ce que**, la batterie (11) étant la batterie de traction d'un véhicule électrique ou hybride, il est mis en œuvre durant une phase de maintenance du véhicule, sa première étape de conditionnement étant activée volontairement par utilisation d'un dispositif nomade de diagnostic connecté au véhicule.

7. Véhicule électrique ou hybride comportant des moyens matériels et logiciels pour mettre en œuvre le procédé selon la revendication 5.

8. Dispositif nomade comportant des moyens matériels et logiciels pour mettre en œuvre le procédé selon la revendication 6.

**Patentansprüche**

1. Verfahren zur Detektion eines Fehlers einer thermischen Schnittstelle zwischen einer Batterie (11) und ihrem System für thermische Konditionierung, **dadurch gekennzeichnet, dass** es umfasst:

   - einen Schritt der thermischen Konditionierung der Batterie durch Verwendung des Konditionierungssystems;
   - am Ende des Schrittes der Konditionierung einen Schritt der Messung eines Temperaturwertes ($T_{bat\_mesuree}$), welcher für die Temperatur der Batterie repräsentativ ist;
   - einen Schritt der Schätzung, durch Verwendung eines Modells der Wärmeaustauschvorgänge (E1, E2, E3) zwischen der Batterie und dem Konditionierungssystem, einer erwarteten Temperatur der Batterie ($T_{bat\_attendue}$) am Ende des Schrittes der Konditionierung;
   - einen Schritt des Vergleichs der gemessenen Temperatur und der geschätzten Temperatur;
   - falls die Abweichung zwischen der gemessenen Temperatur und der geschätzten Temperatur einen vorbestimmten Schwellenwert überschreitet, einen Schritt der Speicherung oder Bereitstellung einer Information, welche die Überschreitung signalisiert,

   wobei das Verfahren **dadurch gekennzeichnet ist, dass** das Konditionierungssystem einen Kreislauf (121) aufweist, in welchem ein Wärmeträgerfluid zirkuliert, wobei das Modell der Wärmeaustauschvorgänge (E1, E2, E3) eine analytische Beziehung oder eine Gesamtheit von analytischen Beziehungen ist, welche in Abhängigkeit von der thermischen Verlustleistung ($P_{th}$) der Batterie (11) und von der Summe der Wärmewiderstände zwischen der Batterie und dem Fluid die Veränderung der Temperaturabweichung zwischen der Batterie und dem Fluid ausdrücken.

2. Verfahren nach Anspruch 1, **dadurch gekennzeichnet, dass** das Modell der Wärmeaustauschvorgänge (E1, E2, E3) in der Summe der Wärmewiderstände zwischen der Batterie (11) und dem Wärmeträgerfluid den Wärmewiderstand der Batterie selbst ($R_{th,bat}$) mit enthält.

3. Verfahren nach Anspruch 2, **dadurch gekennzeichnet, dass**, wenn der Kreislauf des Wärmeträgerfluids in einer Metallsohle (12) angeordnet ist, welche die Batterie (11) trägt, das Modell der Wärmeaustauschvorgänge (E1, E2, E3) in der Summe der Wärmewiderstände zwischen der Batterie (11) und dem Wärmeträgerfluid den Wärmewiderstand der Sohle ($R_{th,sem}$) mit enthält.

4. Verfahren nach Anspruch 3, **dadurch gekennzeichnet, dass**, wenn ein Thermokissen (13) zwischen der Batterie (11) und der Sohle (12) angeordnet ist, das Modell der Wärmeaustauschvorgänge (E1, E2, E3) in der Summe der Wärmewiderstände zwischen der Batterie und dem Wärmeträgerfluid den Wärmewiderstand des Kissens ($R_{th,pad}$) mit enthält.

5. Verfahren nach einem der Ansprüche 1 bis 4, **dadurch gekennzeichnet, dass**, wenn die Batterie (11) die Traktionsbatterie eines Elektro- oder Hybridfahrzeugs ist, es während einer Phase des Fahrens auf der Straße automatisch durchgeführt wird, wobei sein Schritt der Konditionierung aktiviert wird, sobald die Temperatur der Batterie einen vorbestimmten Schwellenwert überschreitet.

6. Verfahren nach einem der Ansprüche 1 bis 4, **dadurch gekennzeichnet, dass**, wenn die Batterie (11) die Traktionsbatterie eines Elektro- oder Hybridfahrzeugs ist, es während einer Phase der Wartung des Fahrzeugs durchgeführt wird, wobei sein erster Schritt der Konditionierung durch Verwendung einer mit dem Fahrzeug verbundenen mobilen Diagnosevorrichtung absichtlich aktiviert wird.

7. Elektro- oder Hybridfahrzeug, welches Hardware- und Softwaremittel zur Durchführung des Verfahrens nach Anspruch 5 aufweist.

8. Mobile Vorrichtung, welche Hardware- und Softwaremittel zur Durchführung des Verfahrens nach Anspruch 6 aufweist.

**Claims**

1. Method for detecting a defective thermal interface between a battery (11) and its thermal conditioning system, **characterized in that** it includes:

   - a step of thermally conditioning the battery by use of the conditioning system;
   - at the end of the conditioning step, a step of measuring a temperature value ($T_{bat\_mesuree}$) that is representative of the temperature of the battery;
   - a step of estimating, by using a model of the exchanges (E1, E2, E3) of heat between the battery and the conditioning system, an expected temperature of the battery ($T_{bat\_attendue}$) at the end of the conditioning step;
   - a step of comparing the measured temperature and the estimated temperature;
   - if the discrepancy between the measured temperature and the estimated temperature exceeds a predetermined threshold, a step of storing or of issuing information signalling this crossing of the threshold,

   the method being **characterized in that**, with the conditioning system comprising a circuit (121) in which a heat-transfer fluid circulates, the model of the heat exchanges (E1, E2, E3) is an analytical relationship or a set of analytical relationships which express, as a function of the thermal power ($P_{th}$) dissipated by the battery (11) and of the sum of the thermal resistances between the battery and the fluid, how the discrepancy in temperature between the battery and the fluid evolves.

2. Method according to Claim 1, **characterized in that** the model of the heat exchanges (E1, E2, E3) includes, in the sum of the thermal resistances between the battery (11) and the heat-transfer fluid, the thermal resistance of the battery itself ($R_{th,bat}$).

3. Method according to Claim 2, **characterized in that**, with the heat-transfer fluid circuit being arranged inside a metal baseplate (12) supporting the battery (11), the model of the heat exchanges (E1, E2, E3) includes, in the sum of the thermal resistances between the battery (11) and the heat-transfer fluid, the thermal resistance of the baseplate ($R_{th,sem}$).

4. Method according to Claim 3, **characterized in that**, with a thermal pad (13) being arranged between the battery (11) and the baseplate (12), the model of the heat exchanges (E1, E2, E3) includes, in the sum of the thermal resistances between the battery and the heat-transfer fluid, the thermal resistance of the pad ($R_{th,pad}$).

5. Method according to any one of Claims 1 to 4, **characterized in that**, with the battery (11) being the traction battery of an electric or hybrid vehicle, it is brought into operation automatically during a phase of road running, its conditioning step being activated as soon as the temperature of the battery exceeds a predefined threshold.

6. Method according to any one of Claims 1 to 4, **characterized in that**, with the battery (11) being the traction battery of an electric or hybrid vehicle, it is implemented during a vehicle maintenance phase, its first conditioning step being activated deliberately through the use of a portable diagnostics device connected to the vehicle.

7. Electric or hybrid vehicle comprising hardware and software means for implementing the method according to Claim 5.

8. Portable device comprising hardware and software means for implementing the method according to Claim 6.

EXT

11

1

13

12

121

121

# Fig. 1

Température
initiale

NOK

$T_{bat\_max}$

$T_{bat\_mesurée}$

$T_{bat\_attendue}$

Temps

# Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2968842

- US 6377880 B1